# EUROPÄISCHE PATENTANMELDUNG

(11) **EP 3 833 155 A1**
(43) Veröffentlichungstag der Anmeldung: **09.06.2021**
(21) Anmeldenummer: 20210258.8
(22) Anmeldetag: 27.11.2020
(51) Int. Cl.: H05B 1/02, A47J 36/24, A47J 39/02

(54) **VORRICHTUNG ZUM TRANSPORT UND ERWÄRMEN VON SPEISEN UND VERFAHREN ZUM BETRIEB EINER DERARTIGEN VORRICHTUNG**

(30) Priorität: 03.12.2019 DE 102019132871
(71) Anmelder: Vorwerk & Co. Interholding GmbH, 42270 Wuppertal (DE)
(72) Erfinder: PIERNIKOSCH, Christopher, 45549 Sprockhövel (DE)
(74) Vertreter: Patent- und Rechtsanwälte Dr. Solf & Zapf

(57) **Zusammenfassung**

Die vorliegende Erfindung betrifft eine Vorrichtung (1) zum Transport und Erwärmen von Speisen, aufweisend ein Gehäuse (2) mit mindestens einem Aufnahmeraum (3), mindestens einem Heizmittel (5) und mindestens einer Steuereinrichtung (6), wobei das Heizmittel (5) mit der Steuereinrichtung (6) steuerbar ist, und wobei mit dem Heizmittel (5) Energie zum Erwärmen von Speisen zumindest in den Aufnahmeraum (3) einbringbar ist sowie ein Verfahren zum Betrieb einer derartigen Vorrichtung.

Eine Vorrichtung (1) zum Transport und zum Erwärmen von Speisen und ein Verfahren zum Betrieb, bei denen der Energiebedarf zum Erwärmen von Speisen optimiert ist, werden realisiert, indem das Heizmittel (5) mindestens eine erste Heizzone (5a) und eine zweite Heizzone (5b) aufweist, und dass die erste Heizzone (5a) und die zweite Heizzone (5b) unabhängig voneinander steuerbar sind.

## Beschreibung

Die Erfindung betrifft eine Vorrichtung zum Transport und Erwärmen von Speisen sowie ein Verfahren zum Betrieb einer derartigen Vorrichtung. Die Vorrichtung weist mindestens ein Gehäuse mit mindestens einem Aufnahmeraum, mindestens einem Heizmittel und mindestens einer Steuereinrichtung auf. Das Gehäuse umgibt den Aufnahmeraum zur Aufnahme von Speisen. Der Betrieb des Heizmittels ist mit der Steuereinrichtung steuerbar, so dass mit dem Heizmittel Energie zum Erwärmen von Speisen zumindest in den Aufnahmeraum einbringbar ist.

Vorrichtungen zum Transport und Erwärmen von Speisen sind in einer Vielzahl von Ausgestaltungen im Stand der Technik bekannt und werden auch als Lunchbox bezeichnet. Vorrichtungen zum Transport und Erwärmen von Speisen weisen üblicherweise ein elektrisches Heizmittel auf, das kabelgebunden über ein Stromnetz mit Spannung versorgbar ist und mit dem die in einem Aufnahmeraum angeordneten Speisen erwärmbar sind. Des Weiteren ist bekannt, dass derartige Vorrichtungen beispielsweise über ein Smartphone oder ein Eingabedisplay unmittelbar an der Vorrichtung programmierbar sind oder zumindest die Heizleistung einstellbar ist.

Ferner ist bekannt, dass derartige Vorrichtungen beispielsweise einen Akkumulator aufweisen, um das elektrische Heizmittel mit Spannung zu versorgen.

Die aus dem Stand der Technik bekannten Vorrichtungen weisen allerdings einen hohen Energiebedarf zum Erwärmen von Speisen auf, was insbesondere bei einer Energieversorgung mit einem Akkumulator nachteilig ist.

Der vorliegenden Erfindung liegt daher die Aufgabe zu Grunde, eine Vorrichtung zum Transport und zum Erwärmen von Speisen und ein Verfahren zum Betrieb anzugeben, bei denen der Energiebedarf zum Erwärmen von Speisen optimiert ist.

Die vorliegende Aufgabe ist bei einer gattungsgemäßen Vorrichtung zum Transport und zum Erwärmen von Speisen gemäß Patentanspruch 1 dadurch gelöst, dass das Heizmittel mindestens eine erste Heizzone und eine zweite Heizzone aufweist, und dass die erste Heizzone und die zweite Heizzone unabhängig voneinander steuerbar sind. Die Heizzonen sind insbesondere unabhängig voneinander einschaltbar oder ausschaltbar. Vorzugsweise sind die Heizzonen mit unterschiedlichen Heizleistungen betreibbar. Beispielsweise weist die Steuereinrichtung für einen Betrieb der Heizzonen eine Leistungselektronik auf, mit der Heizzonen geschaltet werden und mit der die Heizleistung der Heizzonen einstellbar ist. Um Regelvorgänge zu realisieren, weist die Vorrichtung beispielsweise mindestens einen Temperatursensor, insbesondere eine Mehrzahl von Temperatursensoren, auf. Der Temperatursensor ist der Steuereinrichtung zugeordnet.

Insbesondere ist vorgesehen, dass das Heizmittel mehr als zwei Heizzonen aufweist, bevorzugt mindestens drei, mindestens vier, mindestens fünf oder mindestens sechs Heizzonen. Alle Heizzonen sind, insbesondere mit der Steuereinrichtung, unabhängig voneinander steuerbar.

Es ist vorgesehen, dass in einem Aufnahmeraum mindestens zwei oder mehr Heizzonen angeordnet sind. Dadurch können unterschiedliche Bereiche des Aufnahmeraums unabhängig voneinander und beispielsweise mit unterschiedlichen Heizleistungen erwärmt werden, so dass in einen Teil der in dem Aufnahmeraum anordenbaren Speise eine andere Energiemenge einbringbar ist als in mindestens einen weiteren Teil der Speise. Insbesondere sind die Heizzonen in einer Ebene angeordnet.

Es ist auch vorgesehen, dass die Vorrichtung eine Mehrzahl von Aufnahmeräumen aufweist. Um eine Mehrzahl von Aufnahmeräumen auszubilden, weist das Gehäuse beispielsweise feste Trennstege auf, die die Aufnahmeräume voneinander trennen.

Alternativ oder zusätzlich dazu ist vorgesehen, dass mindestens ein variabel in einem Aufnahmeraum positionierbarer Trennsteg umfasst ist, der einen Aufnahmeraum in zwei Aufnahmeräume aufteilt. Beispielsweise sind in dem Gehäuse mindestens zwei, mindestens drei, mindestens vier, mindestens fünf oder mindestens sechs Aufnahmeräume vorgesehen bzw. durch das Anordnen von Trennstegen ausbildbar.

Es liegt im Rahmen der Erfindung, dass jeder Aufnahmeraum genau eine Heizzone des Heizmittels aufweist oder dass ein Aufnahmeraum, mehrere Aufnahmeräume oder alle Aufnahmeräume mindestens zwei oder mehr Heizzonen aufweisen.

Das Gehäuse ist beispielsweise mehrteilig ausgebildet, insbesondere mit mindestens einem Gehäuseunterteil und mindestens einem Gehäuseoberteil. Das Gehäuseoberteil ist beispielsweise als Deckel ausgebildet und ist vorzugsweise schwenkbar an dem Gehäuseunterteil gehalten. Es ist allerdings auch vorgesehen, dass das Gehäuseoberteil von dem Gehäuseunterteil vollständig entfernbar ist. Das Heizmittel und die Steuereinrichtung sind im Gehäuse, insbesondere im Gehäuseunterteil, angeordnet. Vorzugsweise ist das Gehäuse im geschlossenen Zustand fluiddicht, insbesondere druckfest ausgebildet. Dadurch wird verhindert, dass beispielsweise im Aufnahmeraum entstehender Dampf aus dem Gehäuse heraustritt.

Die Erfindung weist gegenüber dem Stand der Technik den Vorteil auf, dass das Erwärmen von Speisen durch die unterschiedlichen Heizzonen energiesparend erfolgt, da nur die Heizzonen betrieben werden können, die für das Erwärmen der Speise bzw. Speisen erforderlich sind. Insbesondere bei Vorrichtungen mit Akkumulator kann dadurch die Betriebsdauer gesteigert werden. Ferner ist die Heizleistung jeder Heizzone individuell einstellbar, so dass jede Speise in jeder Heizzone einen individuellen Energieeintrag erhält, wodurch auch die Zubereitungsqualität gesteigert ist.

Als besonders vorteilhaft hat sich gemäß einer ersten Ausgestaltung der Vorrichtung herausgestellt, wenn vorgesehen ist, dass die Heizzonen thermisch voneinander isoliert sind. Die Vorrichtung weist dazu Mittel zur thermischen Isolation der Heizzonen voneinander auf. Die Mittel zur thermischen Isolation sind vorzugsweise derart angeordnet, dass durch Wärmeleitung kein oder nur ein sehr geringer Wärmeübertrag von einer Heizzone in eine andere Heizzone erfolgt. Vorzugsweise sind Mittel zur thermischen Isolation auch derart angeordnet, dass durch Wärmeleitung kein oder nur ein sehr geringer Wärmeübertrag von einem Aufnahmeraum in einen anderen Aufnahmeraum erfolgt. Durch die thermische Entkopplung der Heizzonen können die Speisen in den einzelnen Heizzonen vollständig separat voneinander erwärmt werden.

Vorzugsweise um die erforderliche Heizleistung genauer regeln zu können, ist gemäß einer weiteren Ausgestaltung der Vorrichtung vorgesehen, dass mindestens eine Wiegeeinrichtung vorgesehen ist. Die Wiegeeinrichtung dient zur Bestimmung des Vorhandenseins einer Speise im Aufnahmeraum und/oder um das Gewicht einer in dem Aufnahmeraum angeordneten Speise zu bestimmen. Vorzugsweise regelt die Steuereinrichtung die Heizleistung des Heizmittels, insbesondere der Heizzonen, unter Verwendung des Gewichts der Speise im Aufnahmeraum bzw. der Speisen in den Aufnahmeräumen. Auf diese Weise ist sichergestellt, dass stets nur die tatsächlich erforderliche Heizleistung zum Erwärmen der Speisen eingebracht wird.

Ferner ist vorteilhaft vorgesehen, dass die Wiegeeinrichtung mindestens zwei Wiegezonen, bevorzugt eine der Anzahl der Heizzonen oder eine der Anzahl der Aufnahmeräume entsprechende Anzahl an Wiegezonen, aufweist. Jede Heizzone weist insbesondere eine eigene Wiegezone auf. Vorzugsweise ist mit der Wiegeeinrichtung das jeweilige Gewicht der Speise in jeder Wiegezone und/oder das Gesamtgewicht aller Speisen in allen Wiegezonen ermittelbar.

Es ist bevorzugt, wenn die Heizleistung mindestens einer Heizzone in Abhängigkeit von mindestens einem Messwert der Wiegeeinrichtung steuerbar ist bzw. gesteuert wird. Beispielsweise ist mit der Wiegeeinrichtung, insbesondere jeder Wiegezone, das Vorhandensein einer Speise bestimmbar und als Messwert bereitstellbar. Insbesondere ist mit der Wiegeeinrichtung das Gewicht mindestens einer Speise in einer Wiegezone ermittelbar und als Messwert zur Steuerung des Heizmittels bereitstellbar.

Auf diese Weise kann für jede Heizzone separat das Gewicht der in der jeweiligen Heizzone angeordneten Speise bestimmt und die für die jeweilige Heizzone erforderliche Heizleistung ermittelt und eingestellt werden. Diese Schritte werden durch die Steuereinrichtung, insbesondere durch mindestens einen Prozessor der Steuereinrichtung, vorgenommen. In einem Aufnahmeraum ist vorzugsweise eine einzige Wiegezone, vorzugsweise mindestens zwei Wiegezonen, vorgesehen.

Die Reinigung der Vorrichtung lässt sich insbesondere dadurch vereinfachen, dass gemäß einer weiteren Ausgestaltung der Vorrichtung vorgesehen ist, dass mindestens ein Aufnahmebehälter vorgesehen ist, und dass der Aufnahmebehälter im Aufnahmeraum zur Aufnahme von Speisen anordenbar ist. Die Speise kann vorzugsweise zusammen mit dem Aufnahmebehälter aus dem Aufnahmeraum entnommen bzw. in diesen eingebracht werden. Die Speise steht folglich nur mit dem Aufnahmebehälter in Kontakt, so dass dieser aus der Vorrichtung entnommen und gereinigt werden kann.

Beispielsweise weist der Aufnahmebehälter Mittel zur thermischen Isolation auf, um die Heizzonen und/oder mehrere Aufnahmeräume thermisch zu entkoppeln. Vorzugsweise ist vorgesehen, dass die Vorrichtung eine Mehrzahl von Aufnahmebehältern aufweist. Alle Aufnahmebehälter sind in den Aufnahmeraum bzw. die Aufnahmeräume einbringbar. Beispielsweise entspricht die Anzahl an Aufnahmebehältern der Anzahl an Heizzonen, insbesondere in einem einzigen Aufnahmeraum. Jeder Heizzone ist folglich mindestens ein Aufnahmebehälter zugeordnet, so dass die Speise in jedem Aufnahmebehälter jeweils mit einer Heizzone separat voneinander erwärmbar ist. Ferner ist vorgesehen, dass jedem Aufnahmebehälter mindestens zwei Heizzonen zugeordnet sind.

Insbesondere ist jedem Aufnahmebehälter mindestens eine Wiegezone der Wiegeeinrichtung zugeordnet, so dass das Gewicht der Speisen in jedem Aufnahmebehälter separat bestimmbar und insbesondere die Heizleistung der jeweiligen Heizzone in Abhängigkeit davon einstellbar ist.

Die mobile Nutzung der Vorrichtung lässt sich gemäß einer weiteren Ausgestaltung der Vorrichtung dadurch verbessern, dass mindestens ein Energiespeicher zur Energieversorgung des Heizmittels in dem Gehäuse angeordnet ist. Der Energiespeicher versorgt das Heizmittel mit Energie, so dass die Vorrichtung autark betrieben werden kann. Vorzugsweise ist der Energiespeicher als mindestens ein Akkumulator zur Speicherung von elektrischer Energie ausgebildet.

Eine weitere Ausgestaltung der Vorrichtung sieht vor, dass die Vorrichtung mindestens eine Ladeschnittstelle zum Laden des Energiespeichers aufweist. Die Ladeschnittstelle ist insbesondere als elektrische Schnittstelle, vorzugsweise als Induktionsschnittstelle, als Kabelschnittstelle oder als Schnittstelle zu einem Küchengerät ausgebildet. Die Betriebsspannung des Heizmittels beträgt beispielsweise etwa 12 V, 24 V, 36 V oder 230 V.

Die Schnittstelle zu einem Küchengerät ist beispielsweise als Induktionsschnittstelle oder als eine Mehrzahl von Kontaktmitteln ausgebildet. Eine Kabelschnittstelle ist beispielsweise als Steckerbuchse, insbesondere als USB-Stecker, z. B. Micro-USB oder USB-C, ausgebildet.

Vorzugsweise ist vorgesehen, dass die Steuereinrichtung, insbesondere eine Ladeelektronik der Steuereinrichtung, derart ausgebildet ist, dass bei anliegender Spannung an der Ladeschnittstelle, insbesondere an der Induktionsschnittstelle oder an einer Kabelschnittstelle, ein Netzbetrieb der Vorrichtung möglich ist.

Vorzugsweise wird der Energiespeicher geladen und es ist gleichzeitig ein Betrieb der Vorrichtung, also ein Erwärmen von Speisen, möglich. Dadurch kann die Vorrichtung auch mit einem externen Energiespeicher, insbesondere einer Batterie oder einem Akkumulator, betrieben und geladen werden.

Für das Erwärmen von Speisen hat sich gemäß einer weiteren Ausgestaltung insbesondere als vorteilhaft herausgestellt, wenn vorgesehen ist, dass mittels der Steuereinrichtung zumindest ein Startzeitpunkt und/oder ein Endzeitpunkt, insbesondere eine Uhrzeit, und/oder eine Dauer des Betriebs des Heizmittels, insbesondere der einzelnen Heizzonen, steuerbar ist. Das Einstellen der Steuereinrichtung bzw. ein Programmieren der Steuereinrichtung erfolgt beispielsweise über dafür vorgesehene Tasten am Gehäuse oder über mindestens ein Display mit Touch-Funktion. Vorteilhaft kann der Benutzer manuell festlegen, zu welcher Uhrzeit die Speisen fertig erwärmt sein sollen. Die Steuereinrichtung ermittelt insbesondere auf Basis der vorliegenden Informationen, z.B. dem Gewicht der Speisen, der Anzahl der verwendeten Heizzonen usw. eine erforderliche Heizleistung und Heizdauer und steuert anschließend eigenständig das Erwärmen.

Um insbesondere den Bedienkomfort für einen Benutzer zu steigern, ist gemäß einer weiteren Ausgestaltung der Vorrichtung vorgesehen, dass die Steuereinrichtung mindestens ein Datenverarbeitungssystem und mindestens eine Datenschnittstelle aufweist. Vorzugsweise ist die Datenschnittstelle als Funkschnittstelle ausgebildet, beispielsweise WLAN, Bluetooth oder Mobilfunk. Das Datenverarbeitungssystem umfasst beispielsweise mindestens einen Prozessor und mindestens einen Speicher.

Die Datenschnittstelle ist zum Empfang und zum Versenden von Daten ausgebildet. Über die Datenschnittstelle können beispielsweise Daten wie Akkustand, Soll-Temperatur, Ist-Temperatur, Gewicht der einzelnen Wiegezonen sowie Zeiten zur Steuerung an weitere Geräte, beispielsweise ein Smartphone oder eine Küchenmaschine, übermittelt bzw. von diesen Geräten empfangen werden.

Vorzugsweise ist die Steuereinrichtung derart eingerichtet, dass sie zumindest über die Datenschnittstelle beeinflussbar, beispielsweise konfigurierbar, ist. Ein Konfigurieren, also Einstellen oder Anpassen von Parametern wie Zeiten und Temperaturen, erfolgt insbesondere, indem die Datenschnittstelle eine Verbindung zu mindestens einem Küchengerät oder mindestens einem Datenverarbeitungsgerät herstellt. Beispielsweise lässt sich die Steuereinrichtung über eine grafische Bedienschnittstelle einer Küchenmaschine oder eines Smartphones steuern, eine Erwärmungszeit einstellen oder Informationen über die Vorrichtung, beispielsweise den Akkustand, eine Soll-Temperatur, eine Ist-Temperatur oder das Gewicht in den einzelnen Heizzonen abrufen. Der Nutzer kann sich diese Daten auf einer grafischen Schnittstelle des Datenverarbeitungsgerätes, beispielsweise des Smartphones oder der Küchenmaschine, anschauen und gegebenenfalls verändern.

Das Datenverarbeitungssystem ist zudem beispielsweise derart ausgestaltet, dass anhand des Gewichtes der Speisen in den einzelnen Wiegezonen eine erforderliche Heizleistung bestimmt wird und die Steuereinrichtung anschließend die einzelnen Heizzonen optimiert mit Energie versorgt.

Um Speisen im Aufnahmeraum vorteilhaft zu erwärmen, ist gemäß einer weiteren Ausgestaltung der Vorrichtung vorgesehen, dass die Steuereinrichtung zur Verarbeitung mindestens eines Heizprofils ausgebildet und eingerichtet ist, insbesondere dass das Heizprofil zumindest Anweisungen zur Ansteuerung der Heizzonen beinhaltet. Ein Heizprofil umfasst beispielsweise Steuerbefehle, die die Steuereinrichtung veranlassen, das Heizmittel, insbesondere die einzelnen Heizzonen, mit einer bestimmten Heizleistung zu betreiben.

Ein Heizprofil umfasst beispielsweise Anweisungen zur Dauer der Ansteuerung einer oder mehrerer Heizzonen mit einer bestimmten Leistung oder zur Variation der Leistung über einen zeitlichen Verlauf und/oder das Ein- und Ausschalten von einzelnen Heizzonen zu vorbestimmten Zeitpunkten. Ein Heizprofil ist beispielsweise über ein Eingabemittel der Vorrichtung, beispielsweise Tasten und/oder ein Touch-Display erstellbar und/oder modifizierbar und insbesondere in einem Speicher ablegbar.

Eine weitere Ausgestaltung der Vorrichtung sieht vor, dass mit der Datenschnittstelle mindestens ein Heizprofil empfangbar ist, insbesondere dass das Heizprofil mit der Steuereinrichtung ausführbar ist. Vorzugsweise ist vorgesehen, dass das Heizprofil von einem Smartphone oder einer Küchenmaschine an die Vorrichtung übermittelt wird. Beispielsweise sind die Speisen mit einer Küchenmaschine vorbereitet bzw. vorgegart und die Küchenmaschine übermittelt der Vorrichtung ein zum Kochrezept korrespondierendes Heizprofil zum Erwärmen bzw. abschließenden Garen der Speisen.

Insbesondere eine Interaktion der Vorrichtung mit dem Benutzer lässt sich gemäß einer weiteren Ausgestaltung dadurch verbessern, dass mindestens eine Audioausgabeeinrichtung umfasst ist, insbesondere dass die Audioausgabeeinrichtung zur Ausgabe von Informationssignalen oder Sprache ausgebildet ist. Vorzugsweise wird die Audioausgabeeinrichtung von der Steuereinrichtung, insbesondere dem Datenverarbeitungssystem der Steuereinrichtung, angesteuert. Beispielsweise kann die Beendigung des Erwärmungsvorgangs durch einen Signalton oder eine Sprachausgabe einem Benutzer angezeigt werden. Beispielsweise sind Warntöne oder andere Hinweistöne sowie Sprachausgabe zur Benutzerleitung vorgesehen. Ferner ist vorgesehen, dass die Vorrichtung mindestens ein Mikrofon aufweist, so dass eine Sprachsteuerung durch einen Benutzer möglich ist. Über die Sprachsteuerung kann beispielsweise der gewünschte Erwärmungszeitpunkt eingestellt werden.

Um dem Benutzer Informationen über den Status der Vorrichtung zur Verfügung zu stellen, ist gemäß einer weiteren Ausgestaltung der Vorrichtung vorgesehen, dass mindestens eine Anzeigeeinrichtung, insbesondere mindestens ein Display, umfasst ist. Mit dem Display ist vorzugsweise mindestens eine Temperatur im Aufnahmeraum, ein Füllstand des Energiespeichers und/oder mindestens ein Gewicht einer Speise in mindestens einer Heizzone anzeigbar.

Gemäß einer letzten Ausgestaltung der Vorrichtung ist vorteilhaft vorgesehen, dass die Vorrichtung mindestens ein Erfassungsmittel aufweist. Das Erfassungsmittel ist beispielsweise als Kamera oder als Barcodescanner ausgebildet. Mit dem Erfassungsmittel kann beispielsweise ein Barcode, z. B. in einem Rezeptbuch, erfasst werden, wodurch beispielsweise ein Heizprofil über die Datenschnittstelle angefordert oder ein Heizprofil aus dem Speicher der Vorrichtung geladen wird. Auf diese Weise kann die Vorrichtung zum optimalen Erwärmen einer bestimmten Speise benutzerfreundlich konfiguriert werden.

Die Aufgabe ist ferner durch ein Verfahren zum Betrieb einer Vorrichtung zum Transport und Erwärmen von Speisen, insbesondere nach einem der vorbeschriebenen Ausführungsbeispiele, gelöst. Das Verfahren umfasst mindestens die folgenden Verfahrensschritte:
- Empfangen mindestens eines Heizprofils über mindestens eine Datenschnittstelle der Vorrichtung, wobei das Heizprofil zumindest Anweisungen zum Betrieb des Heizmittels umfasst,
- Betreiben des Heizmittels auf Basis des Heizprofils.

Gemäß einer Ausgestaltung des Verfahrens ist vorgesehen, dass das empfangene Heizprofil von mindestens einem über die Datenschnittstelle verbundenen Küchengerät oder einem Smartphone übermittelt worden ist.

Ferner ist vorgesehen, dass das Heizprofil in Abhängigkeit von einer von einem Küchengerät zubereiteten Speise, insbesondere von dem Küchengerät, erstellt ist. Das Heizprofil wird folglich in Abhängigkeit von der mit dem Küchengerät zubereiteten Speise von dem Küchengerät ausgewählt und zur Übermittlung über die Datenschnittstelle bereitgestellt. Vorzugsweise erstellt das Küchengerät individuell für die zubereitete Speise ein Heizprofil, das unter Verwendung von Parametern der Zubereitung der Speise in der Küchenmaschine konfiguriert ist. Beispielsweise ist vorgesehen, dass die Küchenmaschine die Speise nur zu 90% gart und auf Basis dieser Information ein Heizprofil erstellt, das berücksichtigt, dass die Speise nicht nur erwärmt werden muss, sondern auch noch zu 10% gegart werden muss.

Weitere vorteilhafte Ausgestaltungen der Erfindung ergeben sich aus der folgenden Figurenbeschreibung und den abhängigen Unteransprüchen. Es zeigen:
- Fig. 1: ein Ausführungsbeispiel einer Vorrichtung in perspektivischer Ansicht, und
- Fig. 2: das Ausführungsbeispiel einer Vorrichtung gemäß Fig. 1 in Schnittansicht.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

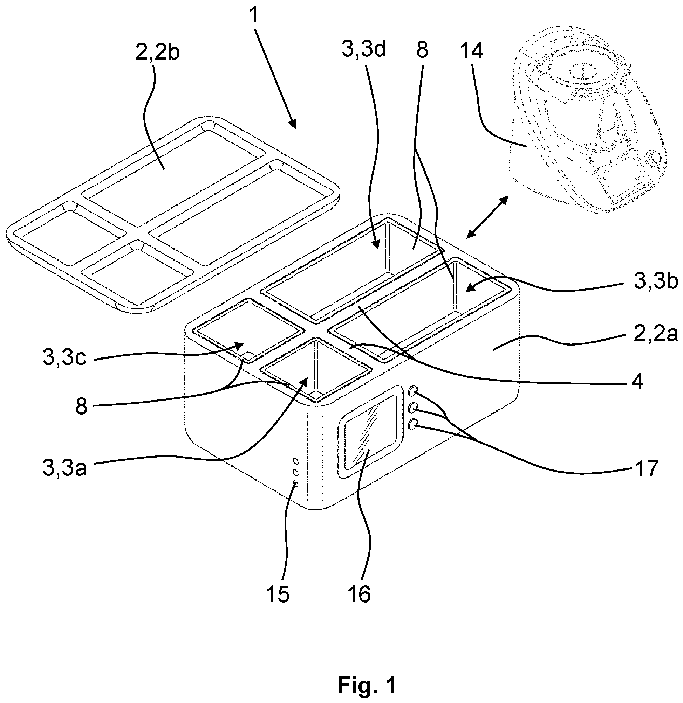

Fig. 1 zeigt ein Ausführungsbeispiel einer Vorrichtung 1 zum Transport und Erwärmen von Speisen in einer perspektivischen Ansicht. Die Vorrichtung 1 weist ein Gehäuse 2 auf, das ein Gehäuseunterteil 2a und ein Gehäuseoberteil 2b in Form eines Deckels aufweist. Das Gehäuseoberteil 2b ist an dem Gehäuseunterteil 2a befestigbar. Das Gehäuse 2 ist zumindest teilweise aus einem thermisch isolierenden Material ausgebildet. Das Gehäuse 2 umgibt bei diesem Ausführungsbeispiel vier Aufnahmeräume 3, nämlich einen ersten Aufnahmeraum 3a, einen zweiten Aufnahmeraum 3b, einen dritten Aufnahmeraum 3c und einen vierten Aufnahmeraum 3d. Die Aufnahmeräume 3 sind durch feste Trennstege 4 voneinander getrennt und thermisch isoliert.

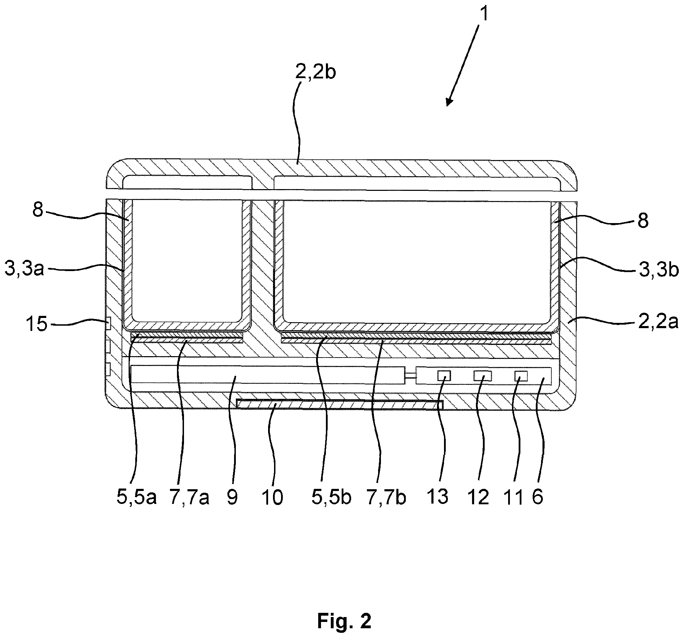

Fig. 2 zeigt das Ausführungsbeispiel gemäß Fig. 1 in einer geschnittenen Ansicht. Die Vorrichtung 1 weist ein Heizmittel 5 sowie eine Steuereinrichtung 6 auf. Die Steuereinrichtung 6 ist unterhalb der Aufnahmeräume 3a, 3b, 3c, 3d im Gehäuse 2, insbesondere im Gehäuseunterteil 2a, angeordnet. Das Heizmittel 5 ist mit der Steuereinrichtung 6 steuerbar, wobei mit dem Heizmittel 5 Energie zum Erwärmen von - nicht dargestellten - Speisen in die Aufnahmeräume 3a, 3b, 3c, 3d - siehe auch Fig. 1 - einbringbar ist. Die Steuereinrichtung 6 weist ferner für jeden Aufnahmeraum 3a, 3b, 3c, 3d einen - nicht dargestellten - Temperatursensor auf.

Das Heizmittel 5 weist insgesamt vier Heizzonen 5a, 5b auf, von denen zwei in Fig. 2 dargestellt sind und die unabhängig voneinander steuerbar sind. Jeder Aufnahmeraum 3a, 3b, 3c, 3d weist eine Heizzone 5a, 5b auf. Mit der Steuereinrichtung 6 kann beispielsweise jede der Heizzonen 5a, 5b unabhängig voneinander eingeschaltet, ausgeschaltet und mit unterschiedlichen Heizleistungen betrieben werden. Die Heizzonen 5a, 5b sind thermisch voneinander isoliert.

Zusätzlich zum Heizmittel 5 weist die Vorrichtung 1 eine Wiegeeinrichtung 7 auf, mit der das Gewicht von in den Aufnahmeräumen 3a, 3b, 3c, 3d anordenbaren Speisen bestimmbar ist. Die Wiegeeinrichtung 7 weist bei diesem Ausführungsbeispiel insgesamt vier Wiegezonen 7a, 7b auf, von denen zwei, nämlich eine erste Wiegezone 7a und eine zweite Wiegezone 7b, in Fig. 2 dargestellt sind. Die Wiegezonen 7a, 7b sind unabhängig voneinander verwendbar. Für jeden Aufnahmeraum 3a, 3b, 3c, 3d ist eine Wiegezone 7a, 7b vorgesehen, so dass das Gewicht der Speisen für jeden Aufnahmeraum 3a, 3b, 3c, 3d separat bestimmbar ist. In Abhängigkeit von dem Gewicht der Speisen in einem Aufnahmeraum 3a, 3b, 3c, 3d ist beispielsweise eine Heizleistung der jeweiligen Heizzone 5a, 5b durch die Steuereinrichtung 6 einstellbar.

Gemäß Fig. 1 und Fig. 2 weist die Vorrichtung 1 bei diesem Ausführungsbeispiel vier Aufnahmebehälter 8 auf, wobei jeweils ein Aufnahmebehälter 8 in jeweils einen Aufnahmeraum 3a, 3b, 3c, 3d eingesetzt ist. Die Aufnahmebehälter 8 sind aus den Aufnahmeräumen 3a, 3b, 3c, 3d entnehmbar, so dass sie einfach zu reinigen sind. Die Aufnahmebehälter 8 sind beispielsweise aus rostfreiem Stahl hergestellt. Die Anzahl der Aufnahmebehälter 8 entspricht bei diesem Ausführungsbeispiel der Anzahl an Heizzonen 5a, 5b.

In dem Gehäuse 2, insbesondere in dem Gehäuseunterteil 2a, ist unterhalb der Aufnahmeräume 3a, 3b, 3c, 3d ein Energiespeicher 9 angeordnet, der bei diesem Ausführungsbeispiel als Akkumulator zur Speicherung elektrischer Energie ausgebildet ist. Der Energiespeicher 9 ist über eine Ladeschnittstelle 10 aufladbar, die bei diesem Ausführungsbeispiel als Induktionsschnittstelle ausgebildet ist. Die Ladeschnittstelle 10 ist so ausgebildet und eingerichtet, dass, wenn die Vorrichtung 1 auf einer zur Ladeschnittstelle 10 korrespondierenden - nicht dargestellten - Ladespule angeordnet ist, nicht nur der Energiespeicher 9 geladen wird, sondern zusätzlich ein Betrieb der Vorrichtung 1, insbesondere des Heizmittels 5, möglich ist.

Die Steuereinrichtung 6 umfasst bei diesem Ausführungsbeispiel ein Datenverarbeitungssystem 11, eine Datenschnittstelle 12 sowie eine Leistungselektronik 13 zum Betrieb des Heizmittels 5, insbesondere der vier Heizzonen 5a, 5b.

Das Datenverarbeitungssystem 11 der Steuereinrichtung 6 umfasst mindestens einen Prozessor und mindestens einen Speicher zum Speichern von Daten. Über die Datenschnittstelle 12 der Steuereinrichtung 6 sind Daten empfangbar und versendbar. Bei diesem Ausführungsbeispiel ist die Datenschnittstelle 12 als kombinierte WLAN- und Bluetooth-Schnittstelle ausgebildet. Über die Datenschnittstelle 12 sind Heizprofile, beispielsweise von einer Küchenmaschine 14 gemäß Fig. 1, empfangbar. Das Heizprofil umfasst insbesondere Anweisungen, die die Steuereinrichtung 6, insbesondere das Datenverarbeitungssystem 11 der Steuereinrichtung 6, veranlassen, über die Leistungselektronik 13 die Heizzonen 5a, 5b des Heizmittels 5 mit einer bestimmten Heizleistung zu betreiben. Die Heizleistung der Heizzonen 5a, 5b ist vorzugsweise abhängig von der Art und/oder Menge der in die Aufnahmebehälter 8 eingebrachten Speisen.

Über die Datenschnittstelle 12 - gemäß Fig. 2 - ist die Vorrichtung 1 beispielsweise auch mit einem - nicht dargestellten - Smartphone verbindbar, so dass auf dem Smartphone eine grafische Benutzerschnittstelle für die Vorrichtung 1 anzeigbar ist und über diese die Vorrichtung 1 programmierbar ist, beispielsweise eine Zeit einstellbar ist, zu der das Erwärmen von Speisen in den Aufnahmebehältern 8 abgeschlossen sein soll.

Die Vorrichtung 1 weist gemäß Fig. 1 und Fig. 2 eine Audioausgabeeinrichtung 15 auf, die bei diesem Ausführungsbeispiel als Lautsprecher ausgebildet ist und von der Steuereinrichtung 6 angesteuert wird. Mit der Audioausgabeeinrichtung 15 ist beispielsweise ein Signal ausgebbar, wenn die Speisen ausreichend erwärmt sind.

Zudem weist die Vorrichtung 1 gemäß Fig. 1 eine Anzeigeeinrichtung 16 auf, die bei diesem Ausführungsbeispiel als Touch-Display ausgebildet ist. Über die Anzeigeeinrichtung 16 kann beispielsweise eine Temperatur im Aufnahmeraum 3, ein Füllstand des Energiespeichers 9 und/oder das Gewicht von in den Aufnahmeräumen 3a, 3b, 3c, 3d angeordneten Speisen und/oder ein Gesamtgewicht aller Speisen angezeigt werden. Des Weiteren weist die Vorrichtung 1 drei Eingabetasten 17 zur Steuerung und zur Auswahl von auf der Anzeigeeinrichtung 16 angezeigten Informationen auf.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Vorrichtung
- 2: Gehäuse
- 3: Aufnahmeraum
- 3a: Erster Aufnahmeraum
- 3b: Zweiter Aufnahmeraum
- 3c: Dritter Aufnahmeraum
- 3d: Vierter Aufnahmeraum
- 4: Trennsteg
- 5: Heizmittel
- 5a: Erste Heizzone
- 5b: Zweite Heizzone
- 6: Steuereinrichtung
- 7: Wiegeeinrichtung
- 7a: Erste Wiegezone
- 7b: Zweite Wiegezone
- 8: Aufnahmebehälter
- 9: Energiespeicher
- 10: Ladeschnittstelle
- 11: Datenverarbeitungssystem
- 12: Datenschnittstelle
- 13: Leistungselektronik
- 14: Küchenmaschine
- 15: Audioausgabeeinrichtung
- 16: Anzeigeeinrichtung
- 17: Eingabetasten

## Patentansprüche

1. Vorrichtung (1) zum Transport und Erwärmen von Speisen, aufweisend ein Gehäuse (2) mit mindestens einem Aufnahmeraum (3), mindestens einem Heizmittel (5) und mindestens einer Steuereinrichtung (6), wobei das Heizmittel (5) mit der Steuereinrichtung (6) steuerbar ist, und wobei mit dem Heizmittel (5) Energie zum Erwärmen von Speisen zumindest in den Aufnahmeraum (3) einbringbar ist,
**dadurch gekennzeichnet, dass**
das Heizmittel (5) mindestens eine erste Heizzone (5a) und eine zweite Heizzone (5b) aufweist, und dass die erste Heizzone (5a) und die zweite Heizzone (5b) unabhängig voneinander steuerbar sind.

2. Vorrichtung (1) nach Anspruch 1,
**dadurch gekennzeichnet, dass**
die Heizzonen (5a, 5b) thermisch voneinander isoliert sind.

3. Vorrichtung (1) nach Anspruch 1 oder 2,
**dadurch gekennzeichnet, dass**
mindestens eine Wiegeeinrichtung (7) zur Bestimmung des Vorhandenseins und/oder des Gewichts von im Aufnahmeraum (3) anordenbaren Speisen vorgesehen ist, insbesondere dass die Wiegeeinrichtung (7) mindestens zwei Wiegezonen (7a, 7b) aufweist, bevorzugt eine der Anzahl der Heizzonen (5a, 5b) oder der Anzahl an Aufnahmeräumen (3) entsprechende Anzahl an Wiegezonen (7a, 7b) aufweist.

4. Vorrichtung (1) nach Anspruch 3,
**dadurch gekennzeichnet, dass**
die Heizleistung mindestens einer Heizzone (5a, 5b) in Abhängigkeit von mindestens einem Messwert der Wiegeeinrichtung (7), insbesondere dem Gewicht mindestens einer in einer Wiegezone (7a, 7b) angeordneten Speise, steuerbar ist.

5. Vorrichtung (1) nach einem der Ansprüche 1 bis 4,
**dadurch gekennzeichnet, dass**
mindestens ein Aufnahmebehälter (8) vorgesehen ist, und dass der Aufnahmebehälter (8) im Aufnahmeraum (3) zur Aufnahme von Speisen anordenbar ist, insbesondere dass die Vorrichtung (1) eine Mehrzahl von Aufnahmebehältern (8) aufweist, bevorzugt dass die Anzahl an Aufnahmebehältern (8) der Anzahl an Heizzonen (5a, 5b) entspricht.

6. Vorrichtung (1) nach einem der Ansprüche 1 bis 5,
**dadurch gekennzeichnet, dass**
mindestens ein Energiespeicher (9) zur Energieversorgung des Heizmittels (5), insbesondere mindestens ein Akkumulator, in dem Gehäuse (2) angeordnet ist.

7. Vorrichtung nach Anspruch 6,
**dadurch gekennzeichnet, dass**
mindestens eine Ladeschnittstelle (10) zum Laden des Energiespeichers (9) vorgesehen ist, insbesondere dass die Ladeschnittstelle (10) als elektrische Schnittstelle, vorzugsweise als Induktionsschnittstelle oder als Kabelschnittstelle oder als Schnittstelle zu einem Küchengerät (14), ausgebildet ist, besonders bevorzugt dass bei an der Ladeschnittstelle (10) anliegender Spannung ein Netzbetrieb der Vorrichtung (1) möglich ist.

8. Vorrichtung (1) nach einem der Ansprüche 1 bis 7,
**dadurch gekennzeichnet, dass**
mittels der Steuereinrichtung (6) ein Startzeitpunkt und/oder ein Endzeitpunkt und/oder eine Dauer eines Betriebs des Heizmittels (5), insbesondere der einzelnen Heizzonen (5a, 5b), steuerbar ist.

9. Vorrichtung (1) nach einem der Ansprüche 1 bis 8,
**dadurch gekennzeichnet, dass**
die Steuereinrichtung (6) mindestens ein Datenverarbeitungssystem (11) und mindestens eine Datenschnittstelle (12) aufweist, insbesondere dass die Datenschnittstelle (12) als Funkschnittstelle ausgebildet ist, bevorzugt WLAN, Bluetooth oder Mobilfunk.

10. Vorrichtung (1) nach einem der Ansprüche 1 bis 9,
**dadurch gekennzeichnet, dass**
die Steuereinrichtung (6) zumindest über die Datenschnittstelle (12) beeinflussbar ist, insbesondere indem mit der Datenschnittstelle (12) eine Verbindung zu mindestens einem Küchengerät (14) und/oder mindestens einem Datenverarbeitungsgerät, insbesondere einem Smartphone, herstellbar ist.

11. Vorrichtung (1) einem der Ansprüche 1 bis 10,
**dadurch gekennzeichnet, dass**
die Steuereinrichtung (6) zur Verarbeitung mindestens eines Heizprofils ausgebildet und eingerichtet ist, und dass das Heizprofil zumindest Anweisungen zur Ansteuerung der Heizzonen (5a, 5b) durch die Steuereinrichtung (6) beinhaltet.

12. Vorrichtung (1) nach den Ansprüchen 9 und 11,
**dadurch gekennzeichnet, dass**
mit der Datenschnittstelle (12) der Steuereinrichtung (6) mindestens ein Heizprofil empfangbar ist.

13. Vorrichtung (1) nach einem der Ansprüche 1 bis 12,
**dadurch gekennzeichnet, dass**
mindestens eine Audioausgabeeinrichtung (15) vorgesehen ist, insbesondere zur Ausgabe von Informationssignalen oder Sprache und/oder dass mindestens eine Anzeigeeinrichtung (16), insbesondere mindestens ein Display, vorgesehen ist, vorzugsweise dass die Anzeigeeinrichtung (16) zur Eingabe ausgebildet ist und/oder mindestens ein Erfassungsmittel, insbesondere mindestens eine Kamera, vorgesehen ist.

14. Verfahren zum Betrieb einer Vorrichtung zum Transport und Erwärmen von Speisen, insbesondere nach einem der Ansprüche 1 bis 13, aufweisend ein Gehäuse (2) mit mindestens einem Aufnahmeraum (3), mindestens einem Heizmittel (5) und mindestens einer Steuereinrichtung (6), wobei das Heizmittel (5) mit der Steuereinrichtung (6) steuerbar ist, und wobei mit dem Heizmittel (5) Energie zum Erwärmen von Speisen zumindest in den Aufnahmeraum (3) einbringbar ist,
**dadurch gekennzeichnet, dass**
mindestens die folgenden Verfahrensschritte umfasst sind:
- Empfangen mindestens eines Heizprofils an mindestens einer Datenschnittstelle (12) der Vorrichtung (1), wobei das Heizprofil zumindest Anweisungen zum Betrieb des Heizmittels (5) umfasst,
- Betreiben des Heizmittels (5) auf Basis des Heizprofils.

15. Verfahren nach Anspruch 14,
**dadurch gekennzeichnet, dass**
das empfangene Heizprofil von mindestens einem über die Datenschnittstelle (12) verbundenen Küchengerät (14) oder einem Smartphone übermittelt worden ist und/oder das Heizprofil in Abhängigkeit von mindestens einer in dem Aufnahmeraum (3) anordenbaren Speise erstellt ist, insbesondere dass das Heizprofil in Abhängigkeit einer von einem Küchengerät (14) zubereiteten Speise von dem Küchengerät (14) erstellt ist.
